# EUROPÄISCHE PATENTSCHRIFT

(11) **EP 0 504 105 B1**
(45) Veröffentlichungstag und Bekanntmachung des Hinweises auf die Patenterteilung: **15.10.1997**
(21) Anmeldenummer: 92810147.6
(22) Anmeldetag: 28.02.1992
(51) Int. Cl.: G05D 13/62

(54) **Elektromotorisches Antriebssystem für periodisch arbeitende Maschinen mit drehwinkelabhängig variablem Drehmoment**
Electromotive drive system for intermittently working machines with angular displacement dependent variable torque
Système d'entraînement électromoteur pour machines à fonctionnement intermittent avec un couple variable dépendant du déplacement angulaire

(30) Priorität: 13.03.1991 CH 764/91
(43) Veröffentlichungstag der Anmeldung: 16.09.1992
(73) Patentinhaber: DE FRIES, Jan Richard, 8304 Wallisellen (CH)
(72) Erfinder: de Fries, Jan Richard, CH-8304 Wallisellen (CH); Metz, Jacob Rudolf, CH-8405 Winterthur (CH); Fenkart, Gerhard, CH-8046 Zürich (CH)

(56) Entgegenhaltungen:
- EP-A- 0 219 290
- EP-A- 0 355 442
- DE-A- 2 828 556
- US-A- 4 811 197
- PATENT ABSTRACTS OF JAPAN vol. 10, no. 380 (P-528)(2437) 19. Dezember 1986 & JP-A-61 169 916
- I.E.E.E. TRANS. ON POWER SYSTEMS August 1988, New York, US, SS 1306-1309; G.T. VUONG ET AL.: 'Rule-based relay modelling for transient-stability studies'

## Beschreibung

Die Erfindung betrifft ein elektromotorisches Antriebssystem für periodisch arbeitende Maschinen nach dem Oberbegriff von Anspruch 1.

Maschinen mit drehwinkelabhängig variablen Drehmomenten sind z.B. Kolbentriebwerke wie Kompressoren bzw. Exzentertriebwerke oder Druck- und Webmaschinen. Typisch für das Verhalten dieser Maschinen ist das sich in Funktion der Winkelstellung der Antriebsachse ändernde Drehmoment, wobei der Drehmomentverlauf sich periodisch wiederholt und sich über nachfolgende Perioden nur wenig ändert. Die Antriebsprobleme mit drehwinkelabhängig variablen Drehmomenten werden, stellvertretend für die bereits erwähnten Maschinen, am Beispiel von Webmaschinen weiter dargestellt.

Für den Antrieb schnellaufender Webmaschinen mittels Elektromotor sind drei Betriebszustände zu unterscheiden, die jeweils spezifische Anforderungen stellen. Es sind dies das Startverhalten, das Abstellverhalten sowie das Laufverhalten.

Die Effekte der drehwinkelabhängig variablen Drehmomente äussern sich vorwiegend beim Laufverhalten.

Charakteristisch für den Webvorgang sind die grossen Unterschiede des Kraftbedarfs der einzelnen Mechanismen während eines Umlaufs der Hauptwelle. In Abhängigkeit des Drehwinkels der Hauptwelle werden, durch die Auslösung von unterschiedlichen Abläufen wie z.B. Fachbildung, Blattbewegung oder Kettablass kurzfristig Energien benötigt, die sich in einer erheblichen momentanen Variation des Drehmomentes und daraus resultierend einer Variation der Winkelgeschwindigkeit des rotierenden Systems äussert. Dadurch, dass die Auslösung der einzelnen Abläufe zu einem genau definierten Drehwinkel stattfinden, variieren die winkelabhängigen Drehmomentverläufe über fortlaufende Perioden nur gering.

Der winkelabhängig stark variierende Drehmomentverlauf bewirkt zum Beispiel:
a) Vibrationen, die sowohl maschinenintern als auch extern, z.B. auf Fundamente, störend oder gar zerstörend wirken können.
b) eine Beeinflussung der Schallabstrahlung von schallerzeugenden Komponenten wie Lade, Schäfte, Torsionsstab usw.
c) Veränderungen des Webprozesses, der in gewissen Stoffen durch sogenannte Streifigkeit sichtbar werden kann.
d) Veränderungen der Spannungsverhältnisse im Gewebe, das sich erst bei der Ausrüstung in Fehlern äussern kann, z.B. das Schrumpfverhalten.

Wünschenswert wäre eine Antriebsvorrichtung, die eine Unabhängigkeit zwischen den kinematischen Abläufen und den auftretenden Drehmomenten ermöglicht. Dies gilt beim kontinuierlichen Webvorgang. Besonders schwierig ist die Erfüllung dieser Forderung beim Anlauf umd beim Abstellen der Webmaschine. Hier sollten die kinematischen Sollwerte unmittelbar nach der Schaltung erreicht werden.

Es sind eine Reihe von Vorschlägen bekannt geworden, um graduelle Unabhängigkeit besser zu erreichen, als dies mit dem einfachen Drehstromantrieb gelingt. Insbesondere werden Schwungräder über Kupplungen zugeschaltet. Diese Lösungen bringen Vorteile in Teilbereichen. Schwungräder ermöglichen eine Reduktion der Drehmomentvariationen, jedoch keine aktive Beeinflussung oder gar eine Elimination. Es ist bisher nicht gelungen in einem vertretbaren wirtschaftlichen Aufwandrahmen eine Entkopplung von Kinematik und Drehmoment für periodisch arbeitende Maschinen mit drehwinkelabhängig variablem Drehmoment, wie z.B. Webmaschinenantriebe, erfolgreich zu lösen. Die Anwendung eines klassischen Reglers und einer Regelung z.B. auf konstante Winkelgeschwindigkeit setzt einen Fehler aus dem Regelvorgang, eine Regelabweichung, voraus, wodurch die Unabhängigkeit prinzipiell nicht vorhanden ist.

Aus der EP 0 219 290 A2 ist eine elektromotorische Antriebsvorrichtung bekannt, um eine Last mit drehwinkelabhängig variablem Drehmoment derart anzutreiben, dass die Rotationsgeschwindigkeit einen konstanten Wert annimmt. Diese bekannte Vorrichtung weist den Nachteil auf, dass die Rotationsgeschwindigkeit durch das Verhalten der Last bestimmt wird, und dass die Last nur mit einer konstanten Rotationsgeschwindigkeit betreibbar ist.

Die vorliegende Erfindung hat die Aufgabe, Maschinen mit drehwinkelabhängig variablen Drehmomenten mit Hilfe einer elektromotorischen Antriebsvorrichtung derart anzutreiben, dass eine Entkoppelung von Kinematik und Drehmoment erzielt wird, sodass der drehwinkelabhängige Winkelgeschwindigkeitsverlauf der angetriebenen Maschine vorgebbar ist.

Die Erfindung schlägt nun vor, die drehwinkelabhängige Drehmomentvariation einer Maschine aktiv mit Hilfe eines stellbaren Elektromotors sowie einer adaptiven Steuerung kompensierend zu beeinflussen. Gemäss der Erfindung wird die Aufgabe nach den Kennzeichen von Anspruch 1 gelöst. Die abhängigen Ansprüche beziehen sich auf vorteilhafte Ausführungen des Anspruches 1.

Maschinen mit drehwinkelabhängig variablen Drehmomenten wie z.B. Kolbentriebwerke wie Kompressoren bzw. Exzentertriebwerke oder Druck- und Webmaschinen sollen mittels eines elektromotorischen Antriebssystems derart angetrieben werden, dass ein drehwinkelabhängiger Winkelgeschwindigkeitsverlauf, insbesondere auch eine konstante Winkelgeschwindigkeit der Hauptantriebsachse der angetriebenen Maschine vorgebbar ist. Hierzu wird an der Hauptwelle der Drehwinkel sowie das Drehmoment abgegriffen und einem adaptiven Steuersystem zugeführt, das ausgehend von Sollwerten s0, der Winkelgeschwindigkeit in Funktion des Drehwinkels, eine entsprechende Stellgrösse an den Elektromotor anlegt und periodisch iterativ adaptiert, um den Winkelgeschwindigkeitsverlauf der Hauptachse mit dem Sollwert s0 in Übereinstimmung zu bringen.

Zur Erzeugung einer drehwinkelunabhängigen, konstanten Winkelgeschwindigkeit wird der Elektromotor mit einer Drehmoment-Drehwinkel-Kennlinie angesteuert, die der Inversion der Kennlinie des angetriebenen Systems entspricht. Dies wird mit einer sich adaptierenden Steuerung erreicht, in dem nebst dem Drehwinkel ein repräsentatives Signal wie die Winkelgeschwindigkeit und/oder das Drehmoment, vorzugsweise der Hauptwelle der angetriebenen Maschine, gemessen, dem Steuersystem zugeführt und mit einem Sollwert verglichen wird. Daraus wird durch periodische Adaption eine winkeladressierte Wertetabelle von Steuersignalen für die Leistungselektronik und den Elektromotor derart generiert, dass eine hinreichend konstante Winkelgeschwindigkeit erreicht wird. Auf diese Weise wird eine dynamische Laufruhe erzielt, die z.B. zur Minimierung von Maschinen-Fusskräften oder zur Reduzierung von Schallabstrahlungen führt.

Nebst einer konstanten Winkelgeschwindigkeit ist auch ein winkelabhängiger Winkelgeschwindigkeitsverlauf vorgebbar, der, mit Hilfe der adaptiven Steuerung, hinreichend genau reproduziert wird. Somit kann die Winkelgeschwindigkeit zu einem beliebigen Drehwinkel erhöht oder reduziert werden.

Die Erfindung hat verschiedene vorteilhafte Wirkungen.

In Drehwinkelbereichen mit prozessrelevanten Eigenschaften ist die Winkelgeschwindigkeit bzw. das Drehmoment prozessabhängig vorprogrammierbar, was im Effekt einer Prozessoptimierung, wie z.B. üblich durch Wahl einer bestimmten Nockenscheibe, entspricht.

Durch Programmierung der Winkelgeschwindigkeit eines Webmaschinenantriebs sind auf dem Webgut Musterungen erzeugbar. Gewebe sind in Griff und Aussehen sehr empfindlich auf die Zeitabläufe der einzelnen Stufen des Webprozesses. Ungleichförmige Abläufe führen zu Webbildern. Bei der beschriebenen Vorrichtung wird eine vorprogrammierte Ungleichförmigkeit des Antriebs zur Erzeugung einer Musterung benutzt.

Beim Anlaufen und beim Stillsetzen einer Webmaschine kann bei der Programmierung der Winkelgeschwindigkeit auf die fehlerbildenden und die nicht fehlerbildenden Phasen im Anlauf- bzw. Stillsetzungsvorgang derart eingewirkt wird, dass die Beschleunigung vorzugsweise in nicht fehlerbildenden Phasen erfolgt und in den fehlerbildenden Phasen die kurzzeitig verfügbare Antriebsleistung schon im Anlauf zu einer optimalen Annäherung an den Betriebszustand benützt wird.
Gewebe sinken als Folge von Webfehlern im Wert. Solche entstehen u.a. durch Stillsetzungen, Fadenbrüche und dergleichen. Die angegebene Leistungsverteilung hat das Ziel, den Anlaufvorgang in der fehlerempfindlichen Phase nahe an die Verhältnisse bei Betriebsdrehzahl heranzubringen. Die Stillegung der Webmaschine stellt die gleichen Aufgaben in inverser Folge.
Anlauf und Stillegung sollten jeweils aus einer optimalen Position heraus erfolgen, d.h. beim Anlauf sollte ein grösserer, nicht fehlerempfindlicher Teil des Webzyklus beschleunigend durchlaufen werden. Die optimale Position kann durch den erfindungsgemässen Antrieb erzeugt werden. Durch diese beiden Massnahmen können Webfehler vermieden oder zumindest reduziert werden.

Bei der Optimierung des Webvorgangs können in einem gegebenen Bereich Abschnitte des Webzyklus mit unterschiedlichen, frei wählbaren Winkelgeschwindigkeiten programmiert und optimiert werden. Durch diese Massnahme kann die zeitraubende und teure Massnahme der Optimierung durch Auswechseln der Kurvensätze innerhalb gegebener Grenzen vermieden werden.

Webmaschine lösen den grösseren Teil der Bewegungen im Webzyklus durch Kurvengetriebe aus. Wechselt das Gewebe, das Garn oder der Maschinenzustand, so ist meist ein Auswechseln der Kurvensätze notwendig. Die abschnittweise elektronische Programmierung kann in einem bestimmten Bereich den Austausch ersetzen. Sie gestattet dann eine schnellere Optimierung und damit entsprechende Einsparungen.

In einem Webzyklus können die Zonen kleinen Leistungsbedarfs mit einer höheren Winkelgeschwindigkeit durchfahren werden, als dies bei gegebenen Maschinenkonstruktionen vom Gewebe und Aufbau in den Zonen hohen Leistungsbedarfs zulässig ist. Webmaschinen haben einen komplizierten Ablaufzyklus. Zunächst erfolgt die Fachbildung, dann der Schussfadeneintrag, darauf der Anschlag und Rücklauf des Blattes. In diesem letzten Abschnitt wird der grösste Einfluss auf das Gewebebild ausgeübt und der Antrieb hoch beansprucht. Eine Beschleunigung der ersten zwei Phasen erhöht die Anzahl der Schussfadeneinbringungen pro Zeiteinheit. Eine solche Programmierung gestattet es, den Zeitbedarf für den gesamten Zyklus zu senken, d.h. integral schneller zu weben.

Die Charakteristik von Stirlingmaschinen kann wesentlich verändert werden, indem die leistungsbedingte, zyklische Schwankung der Winkelgeschwindigkeit des Antriebs durch Programmierung aufgehoben wird. Erst durch diese Massnahme wird die Stirlingmaschine in einen Zustand gebracht, der ihre Verwendung im vibrationsempfindlichen Umfeld erlaubt. Diese Lösung ist wirtschaftlich dem bekannten Ansatz mit zwei gegenläufigen Motoren überlegen (Carlqvist).

Die Charakteristik von Druckmaschinen, bei denen je nach Aufgabe Zeitabschnitte des Druck- bzw. Farbzyklus optimiert werden, können verbessert werden. Mit einem erfindungsgemässen Antrieb ist eine Optimierung der Registrierqualität durch Minimierung der vorgelagerten Beschleunigungen möglich. Ebenso kann die Farbübertragungszeit programmiert werden.

Die Erfindung ist freilich nicht auf die als Beispiele ausgeführten Maschinen beschränkt.

Nachstehend wird die Erfindung anhand der in den Figuren dargestellten Ausführungsbeispielen näher erläutert.

Es zeigen:
- Fig. 1: Eine prinzipielle Darstellung eines adaptiven Steuersystems mit drehwinkelabhängig gesteuertem Elektromotor für periodisch ablaufende Prozesse wie z.B. Webvorgänge, bei denen die gesamte Antriebsleistung über eine einzige Hauptwelle zugeführt wird.
- Fig. 2: Ein Blockdiagramm einer Ausführung der beim adaptiven Steuersystem gemäss Fig. 1 anzuwendenden Steuervorrichtung.

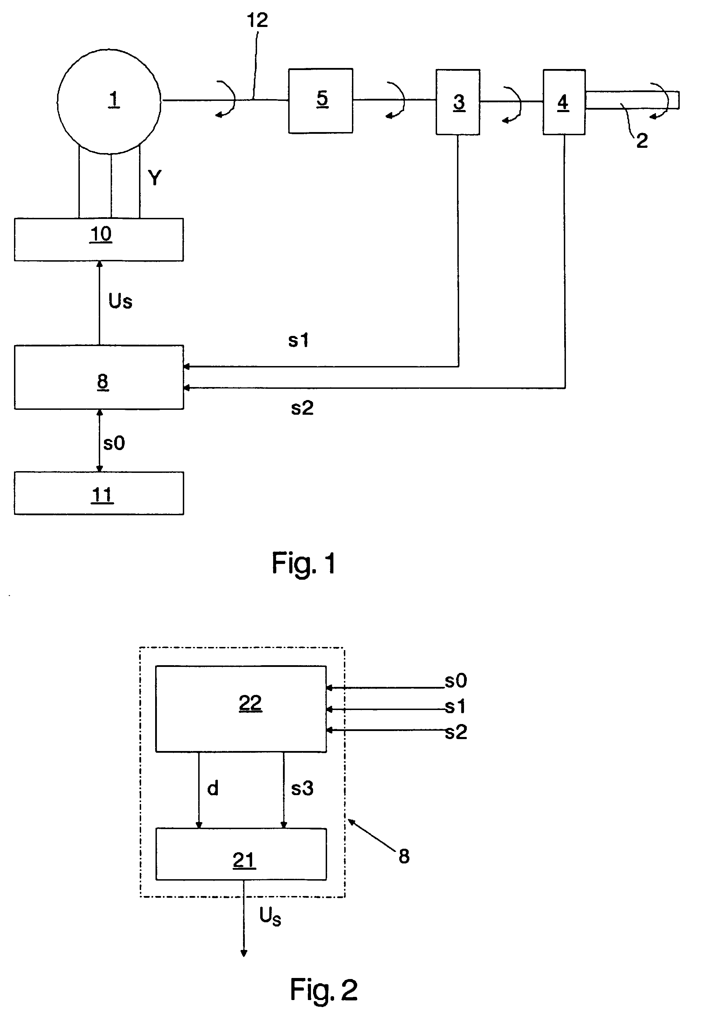

In Fig. 1 ist mit 1 der Elektromotor, z.B. ein Asynchronmotor, bezeichnet, der, gegebenenfalls über ein Übersetzungsgetriebe 5, die Leistung an der Hauptwelle 2 für einen periodisch ablaufenden, angetriebenen Prozess zur Verfügung stellt. Ein Drehmomentsensor 4 misst kontinuierlich das Drehmoment, das aus der Überlagerung von elektromotorischem Antriebsmoment und Reaktionsmoment der Hauptwelle 2 des angetriebenen Systems resultiert, und übermittelt die Werte s2 dem adaptiven Steuersystem 8. Der aktuelle Drehwinkel s1 des angetriebenen Systems wird von einem Drehwinkelgeber 3 ebenfalls kontinuierlich an das Steuersystem 8 übermittelt und daraus, falls notwendig, die Winkelgeschwindigkeit abgeleitet. Die Sollwerte des drehwinkelabhängigen Drehmoment- oder Winkelgeschwindigkeitsverlaufes sind für mindestens eine Periode in der Sollwertvorgabeeinheit 11 festgelegt und werden dem Steuersystem 8 übermittelt. Das adaptive Steuersystem 8 berechnet nach einem in Fig. 2 dargestellten Konzept ein entsprechendes Steuersignal Uₛ für die Stelleinrichtung 10, einem frequenzgesteuerten Leistungsteil, welche den Drehmomentverlauf des Elektromotors 1 durch die Stellgrösse Y moduliert.

Die Stelleinrichtung 10 sowie der Elektromotor 1 genügen hohen dynamischen Anforderungen. Die Komponenten 1 und 10 erlauben ein bezüglich der Hauptwelle beliebiges Drehmomentprofil im Bereich von +/- 350Nm bei einer Hauptwellendrehzahl von 16 bis 20 Umdrehungen pro Sekunde zu realisieren. Dazu wird ein spezieller Käfigläufer-Asynchronmotor kleiner Bauweise mit einer mittleren Leistung von 3,5 kW bis zu 9 kW, einer Spitzenleistung von bis zu 44 kW, und einer kleinen Zeitkonstante verwendet. Ebenso muss die Stelleinrichtung 10, ein hochfrequent getakteter, digital angesteuerter Leistungsteil, über eine kleine Zeitkonstante und eine grosse Leistungsreserve verfügen. Die Stelleinrichtung 10 erlaubt somit den gewünschten Verlauf von Wechselsignalen sehr gut zu reproduzieren. Die elektrische Zeitkonstante von Asynchronmotor und Leistungsteil liegt mit Vorteil im Bereich von 1 ms bis 10 ms.

Das adaptive Steuersystem 8 besteht gemäss Fig. 2 aus einem adaptiven System 22 und einer Steuerung 21. Die Steuerung 21 beinhaltet einen Speicher, in dem winkeladressiert eine Wertetabelle für das Steuersignal Uₛ abgelegt ist. Der aktuelle Drehwinkel s1 der Hauptwelle 2 wird vom Drehwinkelgeber 3 kontinuierlich an das adaptive System 22 und in modifizierter, zeitlich verschobener Form s3 der Steuerung 21 übertragen, welche daraufhin aus der im Speicher der Steuerung 21 abgelegten winkeladressierten Wertetabelle das entsprechende Steuersignal Uₛ ausgibt. Durch die Steuerung 21 kann das Realzeitproblem aus dem adaptiven System 22 in eine hierarchisch tiefere Ebene ausgelagert werden.

Im adaptiven System 22, das ein Rechensystem enthält, wird das sich adaptierende Steuersignal Uₛ in einem Speicher in Form einer winkeladressierten Wertetabelle abgelegt. Die winkelabhängigen Sollwerte s0 werden mit der aktuellen Winkelgeschwindigkeit, abgleitet aus dem Drehwinkelgebersignal s1, und/oder mit dem aktuellen Drehmomentsignal s2 verglichen. Nach einem im adaptiven System 22 abgelegten, spezifischen Algorithmus wird aus der Differenz zwischen Sollwert s0 und Istwert eine adaptierte, winkelabhängige Wertetabelle für das Steuersignal Uₛ abgelegt. Nach einer bestimmten Strategie und einem oder mehreren Arbeitszyklen (z.B. einer Umdrehung der Hauptwelle 2), wird die Wertetabelle des adaptiven Systems 22 über die Datenleitung d in den Speicher der Steuerung 21 transferiert.

Die Verwendung einer adaptierten Steuerung erfordert keine direkte Rückführung der momentanen Messwerte, wie sie für eine Regelung notwendig ist. Die Werte für das Steuersignal Uₛ werden durch Adaption im adaptiven System 22 ermittelt. Der Steueralgorithmus, der von periodischen Vorgängen ausgeht, korrigiert Soll- und Istwert derart, dass der mit der Welle 2 angetriebene periodische Prozess mit der Zeit hinreichend genau dem Sollwert entspricht. Der Algorithmus berücksichtigt Übersetzungsverhältnisse wie z.B. zwischen der Antriebswelle des Elektromotors 1 und der Hauptwelle 2. Ebenso werden mit dem modifizierten Winkelsignal s3 beim Auslesen des Steuersignales Uₛ aus dem Speicher der Steuerung 21 die systembedingten Totzeiten berücksichtigt.

## Patentansprüche

1. Elektromotorisches Antriebssystem (1) für periodisch arbeitende Maschinen mit drehwinkelabhängig variablem Drehmoment, umfassend einen leistungssteuerbaren Elektromotor (1), eine elektronisch ansteuerbare Stelleinrichtung (10), elektronische Messwertaufnehmer (3;4) zur Messung von einem Istwert, insbesondere Drehwinkel (s1), Winkelgeschwindigkeit und/oder Drehmoment (s2), sowie ein programmierbares elektronisches Rechensystem (8), dadurch gekennzeichnet,
dass ein drehwinkelabhängiger Winkelgeschwindigkeitsverlauf (s0) und/oder ein drehwinkelabhängiger Drehmomentsverlauf (s0) einer Antriebswelle (12) des Elektromotors (1) oder einer Hauptwelle (2) als ein Sollwert vorgebbar ist und in einem Sollwertregister (11) ablegbar ist,
dass der Rechner (8) in einer ersten Funktionsphase eine Differenz zwischen den im Sollwertregister (11) vorgegebenen Werten und den Istwerten ermittelt, verarbeitet und zeitkorrigiert in einem Speicher ablegt,
dass der Rechner (8) in einer zweiten Funktionsphase die im Speicher abgelegten Werte der Leistungssteuerung (10) zuführt und erneut die noch verbliebenen Differenzen zwischen Sollwert und Istwert ermittelt, verarbeitet und zeitkorrigiert den Daten des Speichers suponiert, wobei diese beiden Funktionsphasen insgesamt einen iterativen Steuerungsprozess darstellen, der zumindest abläuft bis der Istwert dem vorgebbaren Sollwert entspricht,
sodass die Maschine unabhängig von zyklisch bedingten Schwankungen entsprechend dem Sollwert betreibbar ist.

2. Antriebssystem nach Anspruch 1, dadurch gekennzeichnet, dass die Stelleinrichtung (10) zur Ansteuerung des Elektromotors (1) aus einer digital angesteuerten hochfrequent getakteten Leistungselektronik besteht.

3. Antriebssystem nach einem der Ansprüche 1 bis 2, dadurch gekennzeichnet, dass als Elektromotor (1) ein Käfigläufer-Asynchronmotor oder ein Synchroreluktanzmotor Verwendung findet.

4. Antriebssystem nach einem der Ansprüche 1 bis 3, dadurch gekennzeichnet, dass die Leistungsausnützung bei zyklisch veränderlichem Sollwert des Drehmomentes durch gesteuerte Drehmomente optimiert wird, beispielsweise bei Kolbentriebwerken, Exzentertriebwerken, Druck- oder Webmaschinen.

5. Antriebssystem nach einem der Ansprüche 1 bis 4, dadurch gekennzeichnet, dass das adaptive Steuerungssystem (8) aus einem adaptiven System (22) mit winkeladressierter Wertetabelle und einer Steuerung (21) besteht.

6. Antriebssystem nach einem der Ansprüche 1 bis 5, dadurch gekennzeichnet, dass die Winkelgeschwindigkeit unter einem vorzugebenden Wert variiert, und somit einen konstanten Wert annähert.

7. Antriebssystem nach einem der Ansprüche 1 bis 6, dadurch gekennzeichnet, dass damit Kolbentriebwerke, Exzentertriebwerke, Druck- oder Webmaschinen angetrieben werden, bei denen die Zuführung der gesamte Antriebsleistung über eine einzige Hauptwelle erfolgt.

8. Antriebssystem nach einem der Ansprüche 1 bis 7, dadurch gekennzeichnet, dass der winkelabhängige Winkelgeschwindigkeits- oder Drehmomentverlauf derart beeinflussbar ist, dass sich Umweltverträglichkeitsparameter wie Lärm und/oder Vibrationen minimieren lassen.

9. Antriebssystem nach einem der Ansprüche 1 bis 8, daduch gekennzeichnet, dass bei der Optimierung des Arbeitsvorganges in einem gegebenen Bereich Abschnitte des Arbeitszyklus mit unterschiedlichen, frei wählbaren Winkelgeschwindigkeiten programmiert und optimiert werden.

10. Webmaschine mit einem Antriebssystem nach einem der Ansprüche 1 bis 9.

11. Stirlingmaschine mit einem Antriebssystem nach einem der Ansprüche 1 bis 9.

12. Druckmaschine mit einem Antriebssystem nach einem der Ansprüche 1 bis 9.

## Claims

1. A electric driving system for rotating machines with torque variable in function of angular position, comprising an electric motor with power regulation (1), a power regulating device (10), electronic sensors for effective values, especially angular position (s1) and/or torque (S2) in connection with a programmable computer, connected in a way that torque in function of the angular position (s0) of a driving shaft (12), of an electric motor (1) or a mainshaft can be pre-set and memorised in a register of rated values (11),
whereby the computer (8), in a first phase of action, memorise the differences between the values rated in the register (11) and the effective values measured, processing these values for scale and time shift,
so that the computer (8) in a second phase of action, feeds this difference-values to the power regulation (10). The still remaining, smaller differences between rated values and measured values are measured again and superimposed on the existing difference-values in memory, and feed again to the power regulation (10). This two phases of function are providing an iterative process of regulation, continuing to the point where the actual value is in accordance with the rated values, the system thus driving independent of the cyclic variations in torque.

2. Driving system to claim 1, characterised by a high-frequency modulated power regulator with digital control.

3. Driving system to claim 1 and 2, characterised by an electric motor (1) of the squirrel-cage asynchronous kind and/or a synchroreluctant motor.

4. Driving system to claim 1,2 and 3, characterised by the fact, that the known cyclic variations of torque, for example in piston drives, excenter-drives, printing machines and looms, are pre-set as torque values.

5. Driving system to the claims 1 to 4, characterised by the fact, that the adaptive system contains a table of rated values for angular positions and a governor.

6. Driving system to the claims 1 to 5, characterised by the fact, that the angular speed is set as a fixed value and therefore the system came to this constant value.

7. Driving system to the claims 1 to 6, characterised by the fact that piston-drives, excenter-drives , printing machines and looms are driven by a single drive shaft, controlling the power.

8. Driving system to the claims 1 to 7, characterised by the fact, that angular speed or torque can be controlled to protect the environment minimising noise and/or vibration emissions.

9. Driving system to the claims 1 to 8, characterised by the fact, that in the process of optimisation of a drive, parts of the cycle can be programmed with different values of angular speed.

10. Weaving machine with a driving system according to the claims 1 to 9.

11. Stirling-machine with a driving system according to the claims 1 to 9.

12. Printing machine, with a driving system according to the claims 1 to 9.

## Revendications

1. Système d'entraînement par moteur électrique (1) pour machines à fonction périodique dont le couple rotative varie selon la position angulaire, comprenant un moteur électrique contrôlable (1), un dispositif électronique de contrôle (10), des capteurs électroniques (3; 4) pour la détermination de valeurs saisies, spécialement la position angulaire (s1), la vitesse angulaire et/ou le couple (s2), et un ordinateur programmable (8),
caractérise par le fait que, en fonction de la position angulaire, la vitesse (s0) et/ou le couple rotative (s0) d'un arbre (12) du moteur (1) ou d'un arbre d'entraînement (2), sont registrées comme valeurs prévues dans une mémoire électronique (11) et que, pour une première phase, l'ordinateur (8) enregistre les différences entre les valeurs prévues (11) et les valeurs saisies, les traites pour les délais de temps, et, pour une seconde phase, soumis ces premiers différences comme commandes au dispositif électronique du contrôle moteur (10), de nouveau enregistre les différences restantes , les traites, et les superposes aux valeurs des premiers différences déjà existant, aussi que les deux phases de fonction constituent un processus itérative de commande qui se répète jusque à la situation d'équivalence entre les valeurs prévues et les valeurs saisies , ce qui permet de faire fonctionner la machine selon les valeurs prévues et indépendant des influences cycliques.

2. Système d'entraînement selon revendication 1, caractérisé par le fait, que le dispositif électronique de contrôle (10), pour contrôler le moteur électrique (1) est constitue par électronique de puissance, modulé a haute fréquence et à commande digitale optimalisé

3. Système d'entraînement selon revendication 1 et 2, caractérise par le fait, que un moteur (1) triphasé ou un moteur à synchroreluctance est intégré.

4. Système d'entraînement selon revendication 1,2 à 3, caractérisé par le fait, que l'économie de puissance est optimalisé par une installation à des valeurs prévues du couple, par exemple pour les machine à piston, mechanismes à excentre, des machine à imprimer ou à tisser.

5. Système d'entraînement selon revendications 1 à 4, caractérisé par le fait, que le système adaptive par ordinateur (8) est composé d'un système adaptive (22) un registre des valeurs en fonction de l'angle de rotation et un système de commande (21)

6. Système d'entraînement selon revendication 1 à 5, caractérisé par le fait que la vitesse angulaire monte dessous d'un valeur prévue jusque à ce valeur constant.

7. Système d'entraînement selon revendication 1 à 6, caractérisé par le fait, que des moteurs à piston, des mécanisme à excentre, des machine à imprimer ou a tisser sont entraînés par un arbre centrale.

8. Système d'entraînement selon revendication 1 à 7, caractérisé par le fait, que les effets de bruit et de vibration externes peuvent être minimalises par programmation des la vitesse angulaire ou de couples tournantes

9. Système d'entraînement selon revendications 1 à 8, caractérisé par le fait, que en chemin de l'optimalisation dans des secteurs sélectes d'une opération les valeurs de vitesse angulaire sont librement à optimaliser et à programmer

10. Machine à tisser avec un système d'entraînement selon revendications 1 à 9.

11. Machine thermique Stirling avec un système d'entraînement selon revendications 1 à 9.

12. Machine à imprimer avec un système d'entraînement selon revendications 1 à 9.
